# EUROPEAN PATENT APPLICATION

(11) **EP 3 832 184 A1**
(43) Date of publication of application: **09.06.2021**
(21) Application number: 19212883.3
(22) Date of filing: 02.12.2019
(51) Int. Cl.: F16K 37/00, F16K 31/60, E03C 1/04

(54) **VALVE WITH HAND WHEEL**

(71) Applicant: IMI Hydronic Engineering International SA, 1262 Eysins (CH)
(72) Inventor: HITTINGER, Victor, 67170 Brumath (FR); JILDEROS, Daniel, 50734 Brämhult (SE)
(74) Representative: Zacco Sweden AB

(57) **Abstract**

The present disclosure relates to a valve (1) for controlling a flow of fluid. The valve comprises a valve body (2) and a flow path extending through the valve body. The flow path has an inlet (3) and an outlet (4) located downstream from the inlet, wherein the flow path is arranged to guide a flowing fluid from the inlet to the outlet. Further, the valve comprises a flow adjustment arrangement for controlling a flow of fluid from the fluid inlet to the fluid outlet. The flow adjustment arrangement is located within the valve body between the inlet and the outlet. The valve further comprises a valve handle structure (5) (may also be known as a hand wheel structure) operably connected to the flow adjustment arrangement for manual adjustment of the flow adjustment arrangement by a rotational motion of at least a portion of the valve handle structure. The valve handle structure comprises a handle member (6) rotatable relative to the valve body about a rotational axis and a sensor (7). The sensor is configured to monitor a rotational displacement of the handle member about the rotational axis and to generate a signal indicative of the rotational displacement of the handle member.

## Description

### TECHNICAL FIELD

The present disclosure relates to valves for hydronic installations. In particular, the present disclosure relates to balancing and/or controlling valves for hydronic installations, building management systems connected to a plurality of such valves, and methods for controlling such valves.

### BACKGROUND

Fluid distribution systems (e.g. hydronic systems), for e.g. heating, cooling and water supply are designed to feed a fluid from a source to a consumption point. Each consumption point typically has a calculated and designed flow or differential pressure requirement. However, depending on the type of hydronic system, the flow requirement is often variable overtime and can change with factors like seasonality (e.g. summer or winter), that changes the load from the consumption points, temperature changes of the system fluid, changes in consumption of the system fluid (e.g. for drinking water).

Control valves and balancing valves are frequently used in fluid distribution systems and have a variable opening such that the flow rates can be controlled. Hereby, the flow fed to the consumption point may be varied in an effective manner.

A valve typically controls the flow by a flow adjustment arrangement. The flow adjustment arrangement comprises a closing member, such as e.g. a valve plug, and a closing member receiving portion, such as e.g. a seat arranged to receive the closing member. According to another example, the valve may be a ball valve in which the closing member is shaped as a ball, which is arranged to rotate and shift its position relative the closing member receiving portion, and thereby change the opening degree of the flow adjustment arrangement.

A flow rate of the fluid through a control and/or balancing valve is generally determined by an operator on basis of a measured pressure difference between the pressure at the valve inlet and the pressure at the valve outlet (may be referred to as a differential pressure), and a current setting of the flow adjustment arrangement. The operator then determines the flow rate through the valve from a datasheet of the valve. Such methods of determining the flow rate through the valve may therefore be time consuming, labour intensive, and prone to calculation errors of the operator.

As a remedy to this, the flow rate of fluid through a control and/or balancing valve may be determined directly by means of a flow rate sensor such as e.g. an ultrasound transducer arranged within the valve. Even though such solutions may provide advantages in terms of accuracy, time efficiency and workload they may be relatively complex and costly, and therefore not suitable for all types of valves.

Accordingly, there is a need in the art for new solutions and in particular to new solutions enabling for efficient acquisition of a flow rate of fluid through a valve.

### SUMMARY

It is therefore an object of the present disclosure to provide a valve for controlling fluid flow, a building management system connected to a plurality of such valves, and a method for controlling a valve, which mitigate all or at least some of the above discussed drawbacks of presently known solutions.

This object is achieved by means of a valve for controlling fluid flow, a building management system connected to a plurality of such valves, and a method for controlling a valve as defined in the appended claims. The term exemplary is in the present context to be understood as serving as an instance, example or illustration.

According to a first aspect of the present disclosure, there is provided a valve for controlling fluid flow. The valve comprises a valve body and a flow path extending through the valve body. The flow path has an inlet and an outlet located downstream from the inlet, wherein the flow path is arranged to guide a flowing fluid from the inlet to the outlet. Further, the valve comprises a flow adjustment arrangement for controlling a flow of fluid from the fluid inlet to the fluid outlet. The flow adjustment arrangement is located within the valve body between the inlet and the outlet. The valve further comprises a valve handle structure (may also be known as a hand wheel structure) operably connected to the flow adjustment arrangement for manual adjustment of the flow adjustment arrangement by a rotational motion of at least a portion of the valve handle structure. The valve handle structure comprises a handle member rotatable relative to the valve body about a rotational axis and a sensor. The sensor is configured to monitor a rotational displacement of the handle member about the rotational axis and to generate a signal indicative of the rotational displacement of the handle member.

The above-proposed valve provides for an automated means of determining the current position of the valve handle structure and by extension the configuration of the flow adjustment arrangement. The configuration of the flow adjustment arrangement may be a quantitative measure of how open or closed the valve is, such as e.g. 30% open, 50% open, 80% open, and so forth. A valve that is 0% open is in the present context to be understood as a closed flow where no fluid is permitted to flow through the valve, except for a possible leakage flow caused by to manufacturing tolerances. Analogously, a 100% open valve is open with a maximum opening value.

The sensor may be understood as an electronic encoder arranged to monitor the rotational displacement of the handle member of the valve, wherefrom the configuration of the flow adjustment arrangement can be determined. In more detail, a sensor may be understood as a device that responds to a physical stimulus (such as heat, light, sound, pressure, magnetism, or a particular motion) and transmits a resulting impulse (as for measurement or operating a control).

The present inventor realized that in order to be able to alleviate some of the drawbacks of present flow rate estimation procedure, one needs to automate some of the sub-steps of the procedure. In more detail, the present inventor realized that by arranging a sensor to monitor a rotational displacement of the hand wheel, the need to manually enter/note the hand wheel position is alleviated. Moreover, the accuracy of the subsequent flow rate estimation can be increased since the risk of erroneous interpretation of the hand wheel setting is reduced or even eliminated.

In accordance with an exemplary embodiment of the present disclosure the valve comprises control circuitry operatively connected to the sensor. The control circuitry is configured to obtain the signal in order to determine a configuration of the flow adjustment arrangement. The control circuitry may be in the form of a valve-mounted control device comprising the control circuitry or as an auxiliary control unit comprising the control circuitry and being connectable (by wired or wireless means) to the sensor.

Furthermore, by providing differential pressure readings directly to the control circuit (e.g. from an integrated differential pressure sensor or auxiliary measurement equipment), the flow rate may be obtained directly. The control circuitry may further be provided with a communication module in order to communicate with a central entity such as a building management system (BMS) whereby a large number of valves and their settings may be monitored. Thus, the risk of inadvertent/malicious manipulation of a valve is further reduced since the flow rate measurement may be reported directly and appropriately handled by an operator of the BMS.

Still further, the above-proposed valve provides for faster valve balancing procedure since the control circuitry may be connected to a balancing instrument (such as e.g. TA-SCOPE™ readily available by the Applicant of the present application) whereby the need of an operator/user manually entering the hand wheel position each time it is changed is alleviated.

The control circuitry may be part of a sensor device that houses the sensors as well as the control circuitry. However, the control circuitry may also be a separate unit from the sensor albeit connected (by wired or wireless means) to the sensor in order to obtain sensor data from the sensor.

Moving on, the sensor may be mounted on the valve body or on the rotatable valve handle member and be arranged to monitor the rotational displacement of the handle member relative to the valve body. An advantage of monitoring/sensing the rotational motion of the handle member is that the resolution of the resulting motion of the flow adjustment arrangement is increased as compared to solutions monitoring the resulting axial motion of the associated valve rod. Valve rods are for example employed in valves having a flow adjustment arrangement in the form of a plug/cone and a seat. In more detail, by monitoring the rotational motion instead of the axial motion less advanced sensors can be used with maintained measurement accuracy. Less advanced sensors are not only beneficial from a cost perspective but also since they generally consume less power as compared to more complicated sensors (e.g. laser sensors for distance measurements) which reduces maintenance requirements (e.g. replacement of power source).

The sensor may comprise a power source such as a battery. However, the sensor may alternatively or additionally be powered by a suitable generator arrangement e.g. utilizing a flow of fluid through the valve to power the sensor. Sensor may comprise suitable interfaces such as connectors for providing the signal to an associated or auxiliary unit. Moreover, the sensor may be provided with suitable circuitry for wireless transmission of the signal (e.g. Bluetooth, Wi-Fi, ZigBee, or similar).

Furthermore, the sensor need not necessarily monitor a rotational motion of the handle member directly. In some embodiments, the handle member is connected to an auxiliary part (e.g. a gear within the valve handle structure) arranged to rotate when the handle member is rotated. In those embodiments, the one or more sensors may be arranged to monitor a rotational motion of the auxiliary member and thereby monitor the rotational motion of the handle member indirectly.

In accordance with some embodiments of the present disclosure, the valve handle structure further comprises a second member that is rotationally fixed relative to the valve body about the rotational axis, and the sensor comprises at least one switch arranged to be actuated by the rotational displacement of the handle member relative to the second member. In other words, the handle member is rotatable about the second member about the rotational axis. Accordingly, the sensor may comprise one or more switches, preferably in the form of electromechanical switches. In more detail, the one or more switches are configured for converting mechanical motion to an electrical signal. The sensor may comprise one double pole switch or at least two single pole switches. An advantage of using switches to monitor the rotational motion of the handle member is that they consume little to no power. Moreover, electromechanical switches are not only energy efficient but also cost effective. Consequently, small and compact power sources may be utilized in such solutions, and maintenance requirements (e.g. replacement of power source) are reduced as compared to solutions employing other more complicated and power consuming sensors.

Accordingly, in some embodiments the sensor may be mounted on the valve handle structure and configured to monitor a rotational displacement of the handle member relative to a second member of the valve handle structure. Thereby it is possible to at least partly shield the sensor within the valve handle structure and protect it from the surrounding environment (e.g. from direct contact with liquids). Moreover, by providing the sensor as an integrated unit of the valve handle structure, assembly and installation may be facilitated.

Thus, in accordance with some embodiments of the present disclosure, the at least one switch is mounted on the second member, and the handle member comprises a structure having a plurality of ridges arranged to interact with the at least one switch so to cause an actuation of the at least one switch upon the rotational displacement of the handle member relative to the second member. Naturally, the one or more switches may be mounted on the valve handle member and the second member may then comprise the structure having a plurality of ridges arranged to interact with the one or more switches so to cause an actuation of the one or more switches upon the rotational displacement. However, an advantage of having the switch(es) mounted on the second member is that it is a static part of the valve handle structure which is preferable for mounting electronics and associated wiring/connection points.

Further, in accordance with some embodiments of the present disclosure, the at least one switch is mounted on the second member relative to the structure such that a clockwise rotational displacement of the handle member relative to the second member causes a first switching pattern of the at least one switch, and a counter-clockwise rotational displacement of the handle member relative to the second member causes a second switching pattern of the at least one switch, the first switching pattern being different from the second switching pattern. In other words, the one or more switches are mounted in such a way that different switching patterns are distinguishable when the handle member is rotated in different directions. In general the switch(es) is/are arranged such that three different "states" or "events" are recognized in a sequential order as the handle member rotates, whereupon the sequential order will be different depending on whether the handle member is rotated clockwise or counter-clockwise.

In accordance with some embodiments of the present disclosure, the plurality of ridges are arranged to interact with the at least one switch such that a clockwise rotational displacement of the handle member relative to the second member causes a first switching pattern of the at least one switch, and a counter-clockwise rotational displacement of the handle member relative to the second member causes a second switching pattern of the at least one switch, the first switching pattern being different from the second switching pattern. Thus, as an alternative or addition to control a position of the one or more switches relative to the ridges, one can configured the ridges to generate two different switching patterns when the handle member is rotated clockwise and counter-clockwise, respectively.

Still further, in accordance with some embodiments of the present disclosure, the valve handle structure further comprises a second member that is rotationally fixed relative to the valve body about the rotational axis, and wherein the sensor comprises at least one optical sensor arranged to be actuated by the rotational displacement of the handle member relative to the second member.

Moreover, in some embodiments of the present disclosure, the at least one optical sensor is mounted on the second member, and the handle member comprises a structure having a plurality of optical features arranged to interact with the at least one optical sensor so to cause an actuation of the at least one optical sensor upon the rotational displacement of the handle member relative to the second member. The optical features may be a sequential series of alternatingly opaque and transparent segments moving in front of the optical sensor(s) as the handle member is rotated.

Analogously as discussed in reference to the one or more switches and the plurality ridges, the optical sensor(s) and/or the optical features may be arranged such that it is possible to differentiate clockwise rotation and counter-clockwise rotation of the handle member based on the sensor output.

Accordingly, in some embodiments the at least one optical sensor is mounted on the second member relative to the structure such that a clockwise rotational displacement of the handle member relative to the second member causes a first actuation pattern of the at least one optical sensor, and a counter-clockwise rotational displacement of the handle member relative to the second member causes a second actuation pattern of the at least one optical sensors the first actuation pattern being different from the second actuation pattern.

In some embodiments, the valve handle structure may comprise a sensor in the form of a rotary switch detector (not shown). The rotary switch detector may then be arranged so to share a common rotational axis as the handle member. Alternatively, the rotary switch detector may be arranged so to have a different rotational axis as compared to the rotational axis of the valve handle member by a suitable gear arrangement. In general, the rotary switch detector is arranged so to be actuated by the rotary motion of the handle member.

Further, in some embodiments of the present disclosure, the second member is a static member and the handle member is a movable member, and wherein the sensor is mounted on the second member. An advantage of having the sensor arranged on a static part of the valve (e.g. second member or a portion of the valve body) is that the less complex and more cost effective sensor solutions may be used. In more detail, having electronic components arranged on moving parts generally results in complex assembly processes if the components are to be physically connected to other components on other parts of the valve. Moreover, having the sensor(s) arranged on moving parts may increase the robustness requirements of the sensor(s) and thereby induce additional costs.

According to a second aspect of the present disclosure, there is provided building management system connected to a plurality of valves according to any one of the embodiments discussed herein. Here, the control circuitry of the plurality of valves is further configured to obtain a second signal indicative of a pressure difference between a first pressure within the valve inlet and a second pressure within the valve outlet, and to determine a flow of fluid through the chamber based on the first signal and the second signal. Moreover, the control circuitry of each valve is configured to send the determined flow of fluid to the Building Management System (BMS). The Building Management System (BMS) comprises control circuitry (different from the control circuitry of the valve) configured to receive the determined flow of fluid through the plurality of valves from the plurality of valves, and to generate an alert to an operator to adjust one or more of the valves based on the determined flow of fluid. With this aspect of the disclosure, similar advantages and preferred features are present as in the previously discussed first aspect of the disclosure.

In some embodiments, the valves have a built in differential pressure sensor whereby the electronics of the valves are configured to provide the flow rate directly to the BMS, preferably in real-time. In that case, the BMS will have the correct flow data even if someone would tamper with one of the valves by changing the hand wheel setting.

According to a third aspect of the present disclosure, there is provided a method for controlling a valve. The valve comprises a flow path extending through a valve body, the flow path having an inlet and an outlet located downstream from the inlet, a flow adjustment arrangement for controlling a flow of fluid from the fluid inlet to the fluid outlet, the flow adjustment arrangement located within the valve body between the inlet and the outlet, and a valve handle operably connected to the flow adjustment arrangement for manual adjustment of the flow adjustment arrangement by a rotational motion of the valve handle. Accordingly, the method comprises monitoring a rotational displacement of the handle member relative to the second member, and generating a signal indicative of the rotational displacement of the handle member relative to the second member. With this aspect of the disclosure, similar advantages and preferred features are present as in the previously discussed first aspect of the disclosure.

According to a fourth aspect of the present disclosure, a (non-transitory) computer-readable storage medium storing one or more programs configured to be executed by one or more processors of a control device of a valve, the one or more programs comprising instructions for performing the method according to any one of the embodiments disclosed herein. With this aspect of the disclosure, similar advantages and preferred features are present as in the previously discussed first aspect of the disclosure.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

Further embodiments of the disclosure are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present disclosure will in the following be further clarified with reference to the embodiments described hereinafter.

### BRIEF DESCRIPTION OF THE DRAWINGS

Further objects, features and advantages of embodiments of the disclosure will appear from the following detailed description, reference being made to the accompanying drawings, in which:
Fig. 1 is a perspective view illustration of a valve with a partly exploded view of a valve handle structure in accordance with an embodiment of the present disclosure.
Fig. 2 is a perspective view illustration of a valve handle structure in accordance with an embodiment of the present disclosure.
Fig. 3 is a perspective view illustration of a valve handle structure in accordance with an embodiment of the present disclosure.
Fig. 4 is a schematic illustration of a switching pattern for a sensor of a valve handle structure in accordance with an embodiment of the present disclosure.
Fig. 5 is a schematic illustration of a Building Management System (BMS) in accordance with an embodiment of the present disclosure.
Fig. 6 is a schematic flow chart illustration of a method for controlling a valve in accordance with an embodiment of the present disclosure.

### DETAILED DESCRIPTION

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well-known constructions or functions are not described in detail, so as not to obscure the present invention.

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components.

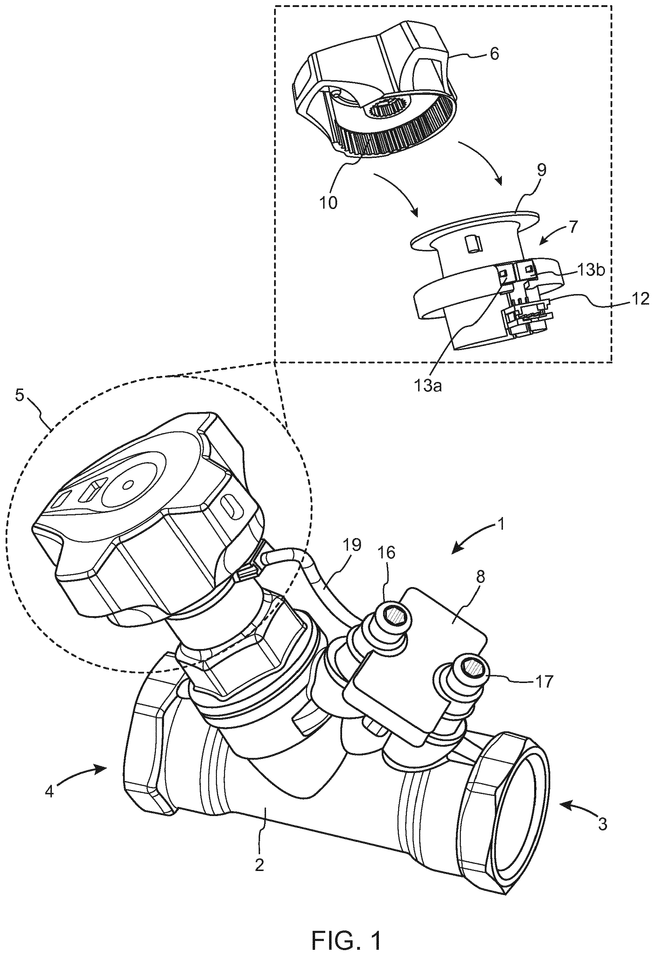

Fig. 1 shows a perspective view of a valve 1 for controlling a fluid flow for a hydronic cooling or heating installation. In particular, a balancing valve 1 is illustrated. In general, a balancing valve 1 controls water flow and balances heat and cooling distribution to different locations. The purpose of the valve is to enable us to supply the correct amount of heat and cooling to each part of the building. As readily appreciated by the skilled reader, even though a balancing valve is used to elucidate the concepts disclosed herein, the same concepts are analogously applicable on other valves such as control valves.

The valve 1 has a valve body 2 made of suitable material such as stainless steel or brass alloys. The valve body may also be referred to as a valve housing. The valve 1 further comprises a flow path extending through the valve body 2. The flow path has an inlet 3 and an outlet 4. The outlet is located downstream of the inlet 3. Accordingly, the flow path is arranged to guide a flowing liquid such as water, from the inlet 3 to the outlet 4. The valve inlet 3 and valve outlet 4 are preferably connectable into a pipe of a hydronic installation.

The valve 1 further has a flow adjustment arrangement (not shown), which may also be referred to as a closing arrangement. The flow adjustment arrangement is arranged to control the flow of liquid from the inlet 3 to the outlet 4. The flow adjustment arrangement may be in the form of an axially movable plug cooperating with a valve seat, a rotatable disc of a butterfly valve, a rotatable ball of a ball valve, or the like. Stated differently, the flow adjustment arrangement may be understood as having, or being comprised of, a closing member which is a movable part within the valve body, and is a movable part within the valve body 2. The valve closing member thus controls the flow from the fluid inlet 3 of the valve body 2 to the fluid outlet 4 of the valve body 2. In an open position of the valve closing member, the valve 1 and the closing arrangement are in their respective open state, and fluid can pass from the fluid inlet 3, along or via the valve closing member within the valve body 2, to the fluid outlet 4. Correspondingly, in the closed position of the valve closing member, fluid is prevented from passing from the fluid inlet 3, along the valve closing member within the valve body 2, to the fluid outlet 4. The valve closing member may, for instance, be embodied as a plug or a cone or a ball (in a ball valve) which can mate with a seat for obtaining the closed position of the valve closing member. The valve closing member may be connected to a valve rod, which, in that case, may be understood as a part of the closing arrangement.

Further, the valve comprises a valve handle structure 5 operably connected to the flow adjustment arrangement for manual adjustment of the flow adjustment arrangement by a rotational motion of at least a portion or part of the valve handle structure 5. The valve handle structure 5 comprises a handle member 6 and a sensor 7. The handle member 6 is rotatable relative to the valve body 2 about a rotational axis. In more detail, the valve handle structure 5 provides a regulating function of the valve 1 in such a way that by rotating or turning the handle member 6, a movement of the valve closing member (e.g. a plug) of the flow adjustment arrangement is caused.

The sensor 7 is configured to monitor a rotational displacement of the handle member 6 about the rotational axis, and to generate a signal indicative of the rotational displacement of the handle member 6. Furthermore, the valve comprises control circuitry, here arranged within a separate control device 8, connected to a connector 12 of the sensor 7 via a wire 19. The control circuitry is configured to obtain/receive the signal in order to determine a configuration of the flow adjustment arrangement, i.e. to what degree the valve is open/closed. The control device 8 may comprise a sensor interface, via which, the control circuitry is connected to the sensor. Moreover, in some embodiments the control device 8 comprises a communication module for wireless communication with external entities via a communication interface. For example, the control device may be arranged to communicate wirelessly with a central Building Management System (BMS) or with the sensor 7 when the sensor 7 is provided with a corresponding communication interface. The sensor 7 may be powered by a power source such as e.g. a battery arranged in the control device 8 or in the sensor 7. The sensor 7 may also comprise its own power source.

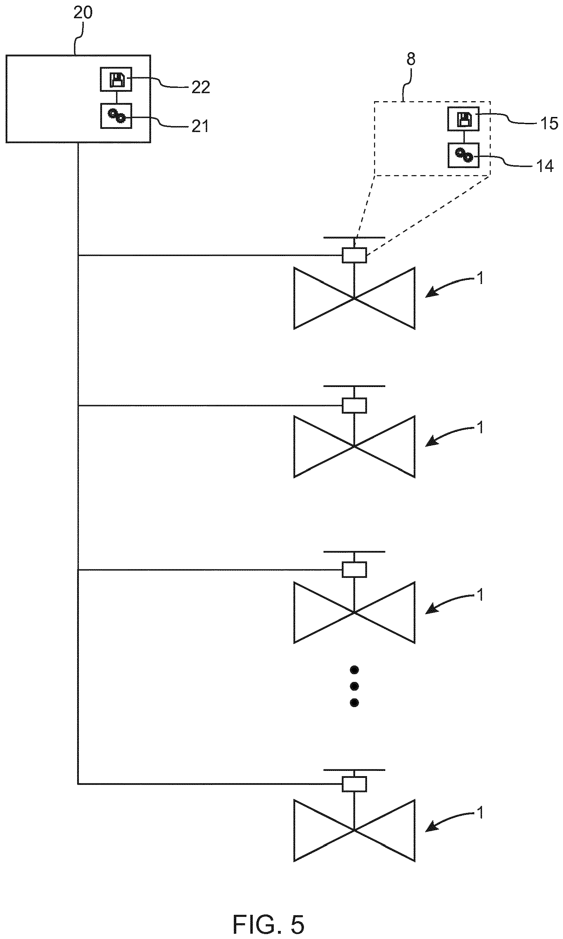

The control circuitry (associated with the control device 8) may be or include any number of hardware components for conducting data or signal processing or for executing computer code stored in a memory (see e.g. ref. 15 in Fig. 5). The device 8 has an associated memory, and the memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to some embodiments, any distributed or local memory device may be utilized with the systems and methods of this description. According to some embodiments the memory is communicably connected to the control circuitry (e.g., via a circuit or any other wired, wireless, or network connection) and includes computer code for executing one or more processes described herein.

It should be appreciated that the sensor interface of the control device 8 may provide the possibility to acquire sensor data directly or via dedicated sensor control circuitry. The communication/antenna interface may further provide the possibility to send output to a remote location (e.g. remote operator or control centre) by means of an antenna. Moreover, some sensors of the valve may communicate with the control device using a local network setup, such as CAN bus, I2C, Ethernet, optical fibres, and so on. Local communication within the valve, between independent valves, as well as remote communication may also be of a wireless type with protocols such as WiFi, LoRa, Zigbee, Bluetooth, or similar mid/short range technologies.

Further, the valve handle structure 5 has a second member 9 that is rotationally fixed relative to the valve handle member 6 about the rotational axis. The sensor comprises two switches 13a, 13b arranged to be actuated by the rotational displacement of the handle member 6 relative to the second member 9. In more detail, the switches 13a, 13b are mounted on the second member 9. In some embodiments the sensor 7 is mounted on the valve body 2 and configured to monitor a rotational displacement of the handle member 6 relative to the valve body 2. However, an advantage of having the sensor 7 arranged on the second member 9 is that the whole valve handle structure 5 including the sensor 7 is provided as an integrated unit, facilitating maintenance, production, and assembly of the valve. Moreover, it provides for a possibility to easily retrofit existing valves.

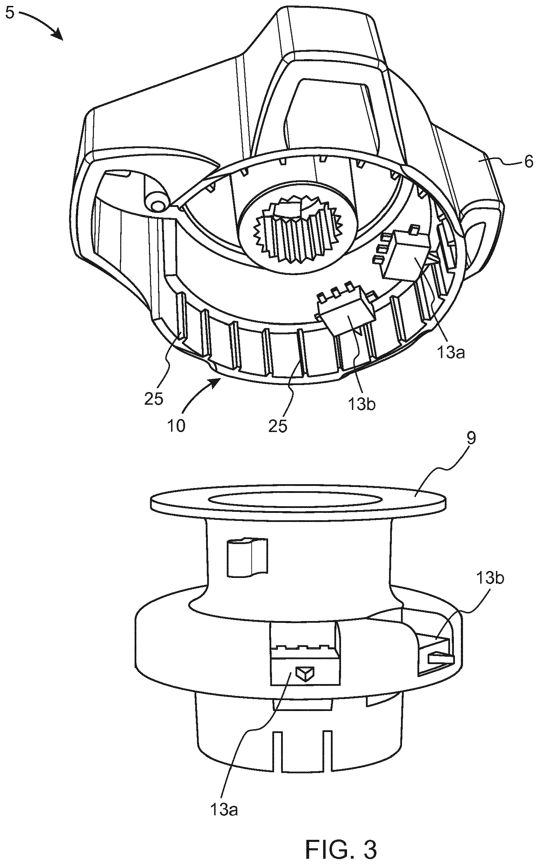

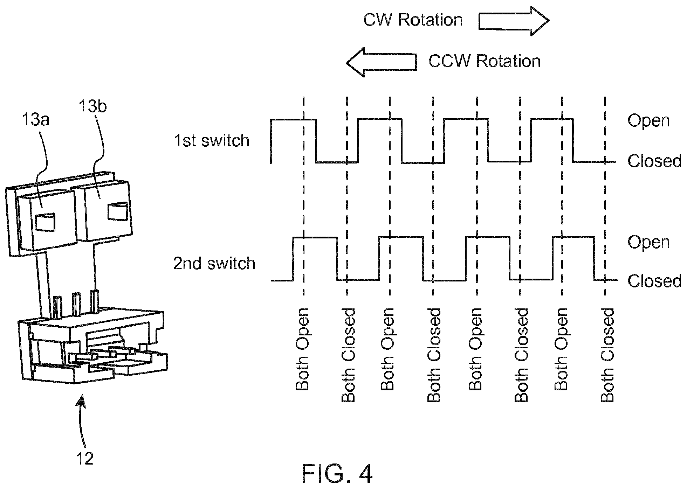

The handle member 6 comprises a structure 10 having a plurality of ridges arranged to interact with the two switches 13a, 13b so to cause an actuation of the switches 13a, 13b upon the rotational displacement of the handle member 6 relative to the second member 9. A ridge is in the present context to be understood as an elevated structure formed on a surface of the handle member 6 that faces the sensor 7. Moreover, the two switches 13a, 13b are preferably mounted such that the sensor 7 is able to differentiate between a clockwise rotation of the handle member 6 and a counter-clockwise rotation of the handle member. This may be achieved in various ways and will be further discussed in reference to Figs. 3 and 4.

The control circuit of the control device 8 may further be configured to obtain a second signal indicative of a pressure difference across the flow adjustment arrangement, i.e. a pressure difference between a first pressure within the valve inlet 3 and a second pressure within the valve outlet 4. The control circuity may then be further configured to determine a flow rate of liquid through the valve. The second signal may be provided by an external device, such as e.g. a measuring device having probes for insertion into the measurement ports 16, 17 of the valve 1. In some embodiments, the control device 8 and the associated control circuitry is comprised in the external measurement device.

In some embodiments, the valve further comprises a second sensor (i.e. a differential pressure sensor) connected to the control circuitry of the control device 8. The second sensor may for example be an integrated sensor such as the one disclosed in the currently pending European patent application no. EP3467389A1, by the same Applicant, incorporated herein by reference. Thus, in some embodiments it is possible to obtain the flow rate through the valve 1 directly in an automated manner, thereby reducing the risk of erroneous flow rate estimations caused by human error, and consequently the risk of having an overall hydronic system incorrectly configured is reduced, which provides advantages in terms of increased system efficiency.

Furthermore, the valve 1, or more specifically, the control device 8 may have a memory (see e.g. ref. 15 in Fig. 5) operatively connected to the control circuitry. Thus, the control circuitry may be further configured to count a number of clockwise rotational displacements and a number of counter-clockwise rotational displacements, and store, in the memory, data indicative of a position of the handle member relative to the second member based on the count. The stored data may alternatively or additionally comprise information about the configuration of the flow adjustment arrangement.

Moreover, in order to facilitate the installation of the valve 1, and of the valve handle structure 5, the control circuitry or control device 8 further comprises a reset feature accessible by an operator of the valve 1 in some embodiments. The reset feature is arranged such that the counter and memory are reset (i.e. set to a reference value) upon actuation of the reset feature. The reset feature may for example be realized as a reset button, a reset switch, or the like. The reset feature may also be realized as a software implementation where the reset feature may be activated via a user interface provided on a handheld device (e.g. smartphone) connected to the control device. Alternatively, the reset feature may be provided by simply disconnecting the control device 8 from an associated power source.

In more detail, the control circuitry may be configured to determine that the configuration of the flow adjustment arrangement is a closed configuration/state, upon actuation of the reset feature by the operator. A closed configuration/state can be understood as a configuration/state in which no flow of fluid from the fluid inlet 3 to the outlet 4 is intended/allowed (except for an unintentional leakage flow caused by manufacturing tolerances). In other words, an installation procedure may for example comprise the steps of closing the flow adjustment arrangement of the valve 1 by means of the valve handle structure 5, and then activating the reset feature such that the control circuitry can determine the configuration of the flow adjustment arrangement based on the rotational motion of the handle member 6 from a correct reference point.

Alternatively, in some embodiments the control circuitry is configured to determine that the configuration of the flow adjustment arrangement is a reference opening configuration/state, upon actuation of the reset feature by the operator. Thus, the installation procedure will work in analogous way as described above but with the difference that the starting position is maximum reference opening configuration/state. If the handle member comprises indicators (indicative of a position of the flow adjustment arrangement), then a valve operator may be instructed to set the handle member at the reference position by means of the indicators before activating the reset feature.

Having a digital encoder (i.e. sensor 7 and control circuitry) in the valve handle structure, may provide the following advantages:
- Faster balancing procedure. This by connecting the digital encoder to a balancing instrument (such as e.g. TA-SCOPE™ readily available by the Applicant of the present application). In this way an operator does not have to enter in the hand wheel position each time it is changed. The measurement on the screen of the balancing instrument is updated in real time while the handle member 6 is turned.
- Together with a built-in differential pressure (dP) sensor in the valve 1 the control device 8 may be configured to send/transmit a flow measurement to a handheld device such as e.g. a smartphone, tablet, or similar, that is connected to the control device 8 of the valve. The measurement on the screen of the handheld device can be updated in real time while the handle member 6 is turned.
- Together with a built-in dP sensor in the valve 1 the control device 8 may be configured to send/transmit a flow rate measurement to a Building Management System (BMS) reading the flow rate. The BMS will get a correct flow data (comprising the flow rate of associated valves) even if someone is changing the handle member 6 position.

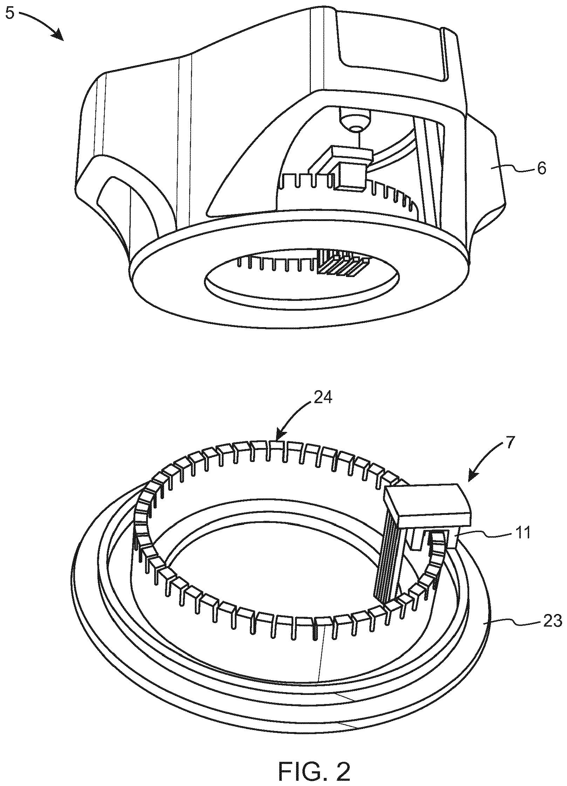

Fig. 2 shows a perspective view of at least some parts of the valve handle structure 5 in accordance with an exemplary embodiment of the present disclosure. In more detail, Fig. 2 shows a handle member 6, a sensor 7 in the form of an optical sensor 11, and an auxiliary part 23. The auxiliary part 23 is connected to the handle member 6 such that a rotation of the handle member 6 about a rotation axis causes a corresponding rotation of the auxiliary part 23. In some embodiments the auxiliary part 23 is an integral part of the handle member 6. The auxiliary part 23 provides the corresponding function as the ridges 10 illustrated in Fig. 1 and in Fig. 3. More specifically, the auxiliary part 23 as a structure having a plurality of optical features 24, here in the form of a plurality of spaced projections, arranged to interact with the optical sensor 11 so to cause an actuation of the optical sensor 11 upon the rotational displacement of the handle member 6. The sensor 7 is preferably fixed to a static part (e.g. second member) of the valve handle structure 5 (not shown) or to the valve body (not shown). In Fig. 2 the sensor 7 may be interpreted as "floating", however, the top surface of the sensor 7, onto which the optical sensor 11 is mounted, may be in the form of a PCB, which in turn is fixed to a different part of the valve handle structure 5. This different part has been omitted in order to more clearly elucidate the actual function of the sensor 7. However, as the skilled reader readily realizes the fixation of the sensor may be realized in various ways and need not be further discussed for the sake of brevity and conciseness.

The spaced projections will provide sequentially alternating opaque and transparent parts passing in the sensors view frustum thereby causing the sensor to generate different signals as the handle member 6 is rotated. The optical sensor 11 is a transmissive sensor having an infrared emitter and two phototransistor detectors, located face-to-face in a surface mount package.

Fig. 3 shows a perspective view of at least some parts of the valve handle structure 5 in accordance with an exemplary embodiment of the present disclosure. The valve handle structure 5 has a handle member 6 and a second member 9. The second member 9 is arranged to be rotationally fixed relative to the valve body about a rotational axis once the valve handle structure 5 is mounted to the valve body. The handle member 6 is on the other hand rotatable relative to the valve body and consequently the handle member 6 is rotatable relative to the second member 9 as well. The valve handle structure 5 has a sensor, in the form of two switches 13a, 13b configured to monitor a rotational displacement of the handle member 6 relative to the second member 9 about the rotational axis. In more detail, the switches 13a, 13b are arranged so to engage the structure 10 provided on an internal surface of the handle member 6. The valve handle structure 5 is arranged such that the internal surface (comprising the structure 10) of the handle member faces the switches, when the valve handle structure 5 is assembled.

The structure 10 has a plurality of ridges 25 projecting outwards from the surface inwards towards the rotational axis in a radial direction. The switches 13a, 13b may also be referred to as lever-type detectors, operable as an operation switch (an input device). Each of the switches 13a, 13b has a detection surface having a button or lever, and circuitry configured so to detect when the button or lever is pushed. Accordingly, the switches 13a, 13b are arranged with the actuation surface facing the structure 10 of the inner surface of the handle member 6. As the handle member 6 is rotated the ridges 25 of the structure 10 engage with the buttons/levers of the switches 13a, 13b thereby generating an input to the switches 13a, 13b.

The ridges 25 and/or the position of the switches 13a, 13b are arranged such that the control circuitry can differentiate between a clockwise rotation and a counter-clockwise rotation of the handle member 6. For example, in the topmost drawing of Fig. 3, none of the switches 13a, 13b are currently not engaged, or more specifically closed, by the ridges 25. Thus, both switches 13a, 13b are open. If the handle member 6 is rotated clockwise then the first switch 13a will be engaged first (turned on) and the second switch 13b will be engaged (turned on) moments later. On the other hand, if the handle member 6 is rotated counter-clockwise, then the second switch 13b will be engaged first (turned on) and the first switch 13a will be engaged (turned on) moments later. These switching patterns are schematically illustrated in Fig. 4. Even though the switch configuration illustrated in Fig. 4 is the same as the one illustrated in Fig. 1, the principles are analogous as for the above described switching pattern in reference to Fig. 3.

Accordingly, when the handle member 6 is rotated clockwise the switching pattern is: both off, first switch on, second switch on, both off, first switch on, second switch on, and so forth. Analogously, when the handle member is rotated counter-clockwise the switching pattern is both off, second switch on, first switch on, both off, second switch on, first switch on, and so forth. In the present context a switch is considered to be on when it is closed, and off when it is open. In some embodiments, the two different switching patterns emerging from different rotational directions are achieved by arranging the switches at a first distance from each other, and arranging the ridges with a second distance from each other, where the first distance (L1) is different from a second distance (L2) or a multiple thereof (L1 ≠ kL2, k being a positive integer).

In an analogous manner the optical features 24 and the optical sensor 11 illustrated in Fig. 2, may be configured to be able to differentiate between clockwise and counter-clockwise rotation of the handle member 6. Moreover, depending on the type of optical sensor other means may be used to achieve this distinction between rotational directions. For example, if the optical sensor is more advanced than just capable of generating a binary output, then one can set the switch to generate an output comprising a sequential order of three different signals based on a sequence of optical features forming an input to the optical sensor.

Moreover, in some embodiments the switches 13a, 13b may be in the form of double pole switches, i.e. switches capable of differentiating if they have been pushed from the "left" or the "right". Using double pole switches may induce some more costs to the overall solution, but provide advantages in terms of robustness and detectability. Moreover, due to the inherent properties of the double pole switch it is possible to differentiate between clockwise and counter-clockwise rotation of the handle member 6 using only a single double pole switch (not shown). However, in such cases (only one double pole switch); manufacturing tolerances of the switch may result in erroneous output signals.

Fig. 5 is a schematic illustration of a building management system (BMS) 20 connected to a plurality of valves 1. The BMS comprises control circuitry 21 (may also be referred to as one or more processors, or a control unit) and a memory device 22 connected to the control circuitry 21. Each valve 1 is however equipped with a control device 8 comprising control circuitry 14 configured to obtain a second signal indicative pressure difference between a first pressure within the valve inlet and a second pressure within the valve outlet, and determine a flow rate of fluid through the chamber based on the first signal and the second signal. The first signal is the signal indicative of the rotational displacement of the handle member.

Each valve 1 may further have an integrated or built-in differential pressure sensor arranged to generate the second signal. Thereby the electronics of each valve 1 may be configured to provide a flow rate of fluid through each valve to the BMS 20. The flow rate may be calculated individually by the control device 8 of each valve, or the BMS 20 may obtain raw sensor data form each valve 1 and derive the flow rate of fluid in each valve.

Accordingly, the control circuitry 21 of the BMS may be configured to obtain the flow rate of fluid through each valve of the plurality of valves 1, and to generate an alert to an operator in order to adjust one or more of the valves based on the determined flow rate of fluid. Accordingly, management of a large hydronic system comprising a plurality of balancing and/or control valves is facilitated since one can obtain the flow rate through each valve in real time as well as current differential pressure values across each valve and the position of each valve's flow adjustment arrangement (i.e. data indicative of how open or closed each valve is).

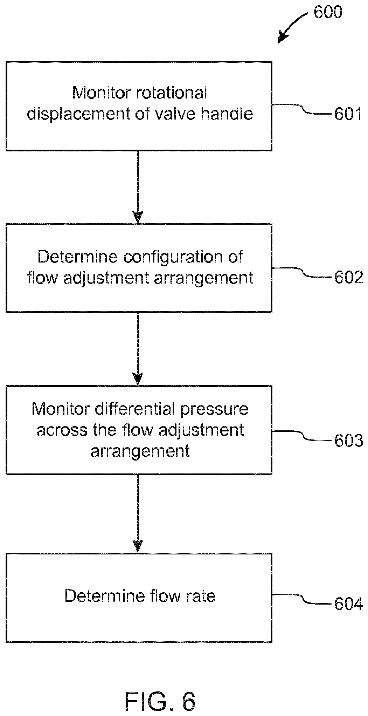

Fig. 6 is a flow chart representation of a method 600 for controlling a valve for controlling a fluid flow in accordance with an embodiment of the present disclosure. The valve being a valve according to any one of the embodiments disclosed herein. The method 600 comprises monitoring 601 a rotational displacement of the handle member (relative to the valve body and/or the second member), and generating 602 a signal indicative of the rotational displacement (or rotational position) of the handle member. From this signal it is possible to determine and/or monitor a configuration of the flow adjustment arrangement.

Furthermore, the method 600 may comprise monitoring 603 a differential pressure across the flow adjustment arrangement (i.e. pressure difference between inlet and outlet of the valve) by means of e.g. an auxiliary measurement device or a built-in/integrated dP sensor. From the differential pressure and the rotational position of the handle member (which is indicative of the configuration of the flow adjustment arrangement), the flow rate through the valve may be determined 604.

Executable instructions for performing these functions are, optionally, included in a non-transitory computer-readable storage medium or other computer program product configured for execution by one or more processors.

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to some embodiments, there is provided a non-transitory computer-readable storage medium storing one or more programs configured to be executed by one or more processors of a valve control device, the one or more programs comprising instructions for performing the method according to any one of the above-discussed embodiments. Alternatively, according to some embodiments a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

Accordingly, it should be understood that parts of the described solution may be implemented either in the valve, in a system located external the valve, or in a combination of internal and external the valve; for instance in a server in communication with the valve, a so called cloud solution. For instance, sensor data may be sent to an external system and that system performs the steps to determine a configuration of the flow adjustment arrangement. The different features and steps of the embodiments may be combined in other combinations than those described.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the disclosure may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. For example, the steps of receiving the first signal and the second signal may be interchanged based on a specific realization. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present disclosure. Other solutions, uses, objectives, and functions within the scope of the disclosure as claimed in the below described patent embodiments should be apparent for the person skilled in the art.

## Claims

1. A valve for controlling fluid flow, the valve comprising:
a valve body;
a flow path extending through the valve body, the flow path having an inlet and an outlet located downstream from the inlet, wherein the flow path is arranged to guide a flowing fluid from the inlet to the outlet;
a flow adjustment arrangement for controlling a flow of fluid from the inlet to the outlet, the flow adjustment arrangement being located within the valve body between the inlet and the outlet; and
a valve handle structure operably connected to the flow adjustment arrangement for manual adjustment of the flow adjustment arrangement by a rotational motion of at least a portion of the valve handle structure;
wherein the valve handle structure comprises:
a handle member rotatable relative to the valve body about a rotational axis; and
a sensor configured to:
monitor a rotational displacement of the handle member about the rotational axis; and
generate a signal indicative of the rotational displacement of the handle member.

2. The valve according to claim 1, wherein the valve handle structure further comprises a second member that is rotationally fixed relative to the valve body about the rotational axis, and wherein the sensor comprises at least one switch arranged to be actuated by the rotational displacement of the handle member relative to the second member.

3. The valve according to claim 2, wherein the at least one switch is mounted on the second member, and
wherein the handle member comprises a structure having a plurality of ridges arranged to interact with the at least one switch so to cause an actuation of the at least one switch upon the rotational displacement of the handle member relative to the second member.

4. The valve according to claim 3, wherein the at least one switch is mounted on the second member relative to the structure such that:
a clockwise rotational displacement of the handle member relative to the second member causes a first switching pattern of the at least one switch, and a counter-clockwise rotational displacement of the handle member relative to the second member causes a second switching pattern of the at least one switch, the first switching pattern being different from the second switching pattern.

5. The valve according to claim 3 or 4, wherein the plurality of ridges are arranged to interact with the at least one switch such that:
a clockwise rotational displacement of the handle member relative to the second member causes a first switching pattern of the at least one switch, and a counter-clockwise rotational displacement of the handle member relative to the second member causes a second switching pattern of the at least one switch, the first switching pattern being different from the second switching pattern.

6. The valve according to any one of claims 3 - 5, wherein the sensor comprises at least two switches, and wherein a spacing between adjacent ridges of the plurality of ridges in different from a spacing between the adjacent switches of the at least two switches.

7. The valve according to claim 1, wherein the valve handle structure further comprises a second member that is rotationally fixed relative to the valve body about the rotational axis, and wherein the sensor comprises at least one optical sensor arranged to be actuated by the rotational displacement of the handle member relative to the second member.

8. The valve according to claim 7, wherein the at least one optical sensor is mounted on the second member, and
wherein the handle member comprises a structure having a plurality of optical features arranged to interact with the at least one optical sensor so to cause an actuation of the at least one optical sensor upon the rotational displacement of the handle member relative to the second member.

9. The valve according to claim 8, wherein the plurality of optical features are arranged to interact with the at least one optical sensor such that:
a clockwise rotational displacement of the handle member relative to the second member causes a first actuation pattern of the at least one optical sensor, and a counter-clockwise rotational displacement of the handle member relative to the second member causes a second actuation pattern of the at least one optical sensors the first actuation pattern being different from the second actuation pattern.

10. The valve according to any one of the preceding claims, further comprising control circuitry operatively connected to the sensor, the control circuitry being configured to obtain the signal in order to determine a configuration of the flow adjustment arrangement.

11. The valve according to claim 10, wherein the signal indicative of the rotational displacement of the handle member is a first signal, and wherein the control circuity is further configured to:
obtain a second signal indicative pressure difference between a first pressure within the valve inlet and a second pressure within the valve outlet;
determine a flow rate of fluid through the chamber based on the first signal and the second signal.

12. The valve according to claim 11, wherein the sensor is a first sensor and wherein the valve further comprises:
a second sensor arranged within the valve and connected to the control circuitry, the second sensor being configured to:
monitor the pressure difference between the first pressure within the valve inlet and the second pressure within the valve outlet; and
generate the second signal.

13. The valve according to claim 11 or 12, wherein the control circuitry is further configured to:
send the determined flow rate of fluid to a Building Management System, BMS, associated with the valve.

14. A building management system connected to a plurality of valves according to claim 13, the building management system comprising control circuitry configured to:
receive the determined flow rate of fluid through the plurality of valves from the plurality of valves; and
generate an alert to an operator to adjust one or more of the valves based on the determined flow rate of fluid.

15. A method for controlling a valve for controlling a fluid flow, wherein the valve comprises a flow path extending through a valve body, the flow path having an inlet and an outlet located downstream from the inlet, a flow adjustment arrangement for controlling a flow of fluid from the fluid inlet to the fluid outlet, the flow adjustment arrangement located within the valve body between the inlet and the outlet, and a valve handle operably connected to the flow adjustment arrangement for manual adjustment of the flow adjustment arrangement by a rotational motion of the valve handle relative to the valve body about a rotational axis, wherein the method comprises:
monitoring a rotational displacement of the handle member about the rotational axis; and
generating a signal indicative of a configuration of the flow adjustment arrangement based on the rotational displacement of the handle member.
